# EUROPEAN PATENT SPECIFICATION

(11) **EP 4 095 627 B1**
(45) Date of publication and mention of the grant of the patent: **18.12.2024**
(21) Application number: 21175517.8
(22) Date of filing: 24.05.2021
(51) Int. Cl.: G05B 17/02

(54) **EVALUATING ALTERNATIVE CONTROL PARAMETERS BASED ON A DIGITAL TWIN**
AUSWERTUNG VON ALTERNATIVEN STEUERPARAMETERN AUF BASIS EINES DIGITALEN ZWILLINGS
ÉVALUATION DES PARAMÈTRES DE CONTRÔLE ALTERNATIFS BASÉE SUR UN DOUBLE NUMÉRIQUE

(43) Date of publication of application: 30.11.2022
(73) Proprietor: ABB Schweiz AG, 5400 Baden (CH)
(72) Inventor: Kohvakka, Mikko, 00380 Helsinki (FI); Hu, Zhongliang, 02160 Espoo (FI); Tamminiemi, Petri, 00380 Helsinki (FI)
(74) Representative: Kolster Oy Ab

(56) References cited:
- EP-A1- 3 611 578
- WO-A1-2020/240065
- US-A1- 2007 038 425
- US-A1- 2016 333 855
- US-B1- 9 881 430

## Description

### FIELD

The following exemplary embodiments relate to industrial automation and to industrial communication networks.

### BACKGROUND

In industrial automation devices, incorrectly configured control parameters may cause safety issues, such as an accidental start of a motor. Thus, it is desirable to improve the safety of adjusting the control parameters of industrial automation devices EP3611578 A1 discloses a digital twin representing a physical factory device and an application performing tests in a virtual system comprising the digital twin. US2007038425 A1 discloses A virtual processor usable in a simulation system. The virtual processor may receive input from a process controller. The process controller provides control signals to the virtual processor. The virtual processor, in turn, provides process signals to one or more field instruments.

### SUMMARY

The scope of protection sought for various exemplary embodiments is set out by the independent claims. The exemplary embodiments and features, if any, described in this specification that do not fall under the scope of the independent claims are to be interpreted as examples useful for understanding various exemplary embodiments.

According to an aspect, there is provided an apparatus comprising at least one processor, and at least one memory including computer program code, wherein the at least one memory and the computer program code are configured, with the at least one processor, to cause the apparatus to: obtain a set of alternative control parameters associated with an industrial automation device; evaluate the set of alternative control parameters by simulating a digital twin associated with the industrial automation device with multiple combinations of inputs, while the digital twin is configured to use the set of alternative control parameters; indicate whether or not the digital twin stays within a safe operating range based on the simulating; and apply the set of alternative control parameters to the industrial automation device.

According to another aspect, there is provided an apparatus comprising means for: obtaining a set of alternative control parameters associated with an industrial automation device; evaluating the set of alternative control parameters by simulating a digital twin associated with the industrial automation device with multiple combinations of inputs, while the digital twin is configured to use the set of alternative control parameters; indicating whether or not the digital twin stays within a safe operating range based on the simulating; and applying the set of alternative control parameters to the industrial automation device.

According to another aspect, there is provided a method comprising: obtaining a set of alternative control parameters associated with an industrial automation device; evaluating the set of alternative control parameters by simulating a digital twin associated with the industrial automation device with multiple combinations of inputs, while the digital twin is configured to use the set of alternative control parameters; indicating whether or not the digital twin stays within a safe operating range based on the simulating; and applying the set of alternative control parameters to the industrial automation device.

According to another aspect, there is provided a computer program comprising instructions for causing an apparatus to perform at least the following: obtain a set of alternative control parameters associated with an industrial automation device; evaluate the set of alternative control parameters by simulating a digital twin associated with the industrial automation device with multiple combinations of inputs, while the digital twin is configured to use the set of alternative control parameters; indicate whether or not the digital twin stays within a safe operating range based on the simulating; and apply the set of alternative control parameters to the industrial automation device.

According to another aspect, there is provided a computer readable medium comprising program instructions for causing an apparatus to perform at least the following: obtain a set of alternative control parameters associated with an industrial automation device; evaluate the set of alternative control parameters by simulating a digital twin associated with the industrial automation device with multiple combinations of inputs, while the digital twin is configured to use the set of alternative control parameters; indicate whether or not the digital twin stays within a safe operating range based on the simulating; and apply the set of alternative control parameters to the industrial automation device.

According to another aspect, there is provided a non-transitory computer readable medium comprising program instructions for causing an apparatus to perform at least the following: obtain a set of alternative control parameters associated with an industrial automation device; evaluate the set of alternative control parameters by simulating a digital twin associated with the industrial automation device with multiple combinations of inputs, while the digital twin is configured to use the set of alternative control parameters; indicate whether or not the digital twin stays within a safe operating range based on the simulating; and apply the set of alternative control parameters to the industrial automation device.

According to another aspect, there is provided a system comprising at least an industrial automation device, a user device, a cloud server, and a remote support device. The user device is configured to: transmit, to the cloud server, one or more messages indicative of a service request associated with the industrial automation device. The cloud server is configured to: receive, from the user device, the one or more messages indicative of the service request associated with the industrial automation device; transmit, to the remote support device, at least a subset of the one or more messages indicative of the service request associated with the industrial automation device; receive, from the remote support device, a set of alternative control parameters associated with the industrial automation device; evaluate the set of alternative control parameters by simulating a digital twin associated with the industrial automation device with multiple combinations of inputs, while the digital twin is configured to use the set of alternative control parameters; transmit, to the user device and/or to the industrial automation device, the set of alternative control parameters; and transmit, to the user device and/or to the industrial automation device, a first indication indicating whether or not the digital twin stays within a safe operating range based on the simulating. The industrial automation device is configured to: receive, from the user device or from the cloud server, the set of alternative control parameters; and apply the set of alternative control parameters.

According to another aspect, there is provided a system comprising at least an industrial automation device, a user device, a cloud server, and a remote support device. The user device comprises means for: transmitting, to the cloud server, one or more messages indicative of a service request associated with the industrial automation device. The cloud server comprises means for: receiving, from the user device, the one or more messages indicative of the service request associated with the industrial automation device; transmitting, to the remote support device, at least a subset of the one or more messages indicative of the service request associated with the industrial automation device; receiving, from the remote support device, a set of alternative control parameters associated with the industrial automation device; evaluating the set of alternative control parameters by simulating a digital twin associated with the industrial automation device with multiple combinations of inputs, while the digital twin is configured to use the set of alternative control parameters; transmitting, to the user device and/or to the industrial automation device, the set of alternative control parameters; and transmitting, to the user device and/or to the industrial automation device, a first indication indicating whether or not the digital twin stays within a safe operating range based on the simulating. The industrial automation device comprises means for: receiving, from the user device or from the cloud server, the set of alternative control parameters; and applying the set of alternative control parameters.

### BRIEF DESCRIPTION OF THE DRAWINGS

In the following, various exemplary embodiments will be described in greater detail with reference to the accompanying drawings, in which
FIG. 1 illustrates a communication system to which some exemplary embodiments may be applied;
FIG. 2 illustrates a signaling diagram according to an exemplary embodiment;
FIG. 3 illustrates a flow chart according to an exemplary embodiment;
FIG. 4 illustrates an apparatus according to an exemplary embodiment.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

The following embodiments are exemplary. Although the specification may refer to "an", "one", or "some" embodiment(s) in several locations of the text, this does not necessarily mean that each such reference is made to the same embodiment(s), or that a particular feature only applies to a single embodiment. Single features of different embodiments may also be combined to provide other embodiments.

Various exemplary embodiments may be applicable to any process in an industrial plant, including a processing system and/or an industrial manufacturing related process and/or a system for a technical process, which is at least partly automated, providing different measured/sensored values for a plurality of variables on one or more devices (equipment) and/or on one or more processes. A non-limiting list of examples includes power plants, pulp and paper plants, manufacturing plants, chemical processing plants, power transmission systems, mining and mineral processing plants, oil and gas systems, data centers, ships, and transportation fleet systems.

Different embodiments and examples are described below using single units, models, equipment and memory, without restricting the embodiments/examples to such a solution. Concepts called cloud computing and/or virtualization may be used. Virtualization may allow a single physical computing device to host one or more instances of virtual machines that appear and operate as independent computing devices, so that a single physical computing device can create, maintain, delete, or otherwise manage virtual machines in a dynamic manner. It is also possible that device operations will be distributed among a plurality of servers, nodes, devices or hosts. In cloud computing network devices, computing devices and/or storage devices provide shared resources. Some other technology advancements, such as Software-Defined Networking (SDN) may cause one or more of the functionalities described below to be migrated to any corresponding abstraction or apparatus or device. Therefore, all words and expressions should be interpreted broadly, and they are intended to illustrate, not to restrict, the exemplary embodiments.

When troubleshooting or commissioning an industrial automation device, the control parameter configuration and/or firmware of the industrial automation device may need to be updated. For example, during troubleshooting, the technical support staff of the device manufacturer may remotely read the warning and failure logs as well as the existing control parameters of the industrial automation device, and then recommend new parameters to solve the issue. However, due to liability reasons, the approval of the new parameters may be the responsibility of the customer, i.e. the user of the industrial automation device. However, there is a challenge in how to validate the new parameters before applying them to the industrial automation device in order to make sure that they are safe to be applied. If the new parameters are not validated appropriately, it may cause issues for example with functional safety related parameters.

For example, incorrectly configured parameters may cause the industrial automation device to start accidentally, which may cause injuries to people located close to the industrial automation device. An industrial automation device such as a variable speed drive may be in remote mode, wherein the start and stop are controlled by external inputs. There may be multiple control parameters related to the configuration of the input selection and the logic behind that, which might cause accidentally starting the drive. There may also be control parameters that can be used to force the start of the drive.

As another example, the encoder configuration of a variable speed drive may also be prone to human error. The encoder is connected to the reference chain of the drive. For example, changing the encoder pulse count may affect the measured speed. An additional check could be done by cross-referencing speed-related control parameters, such as gearing, minimum and maximum limits, etc.

Some exemplary embodiments may be used to validate the new control parameters by simulating the effects of the changes with a digital twin before applying them to the actual industrial automation device. The digital twin is a virtual model that may be used to simulate the operation of the industrial automation device. The digital twin may comprise a test bench, which systematically validates all possible combinations of inputs and outputs including rare corner cases. The digital twin may comprise a detailed model of the entire automation system that the industrial automation device is part of, or just a subset of the automation system, such as a functional safety system. This validation may ensure that the industrial automation device does not enter an unintentional state (for example that it does not start accidentally).

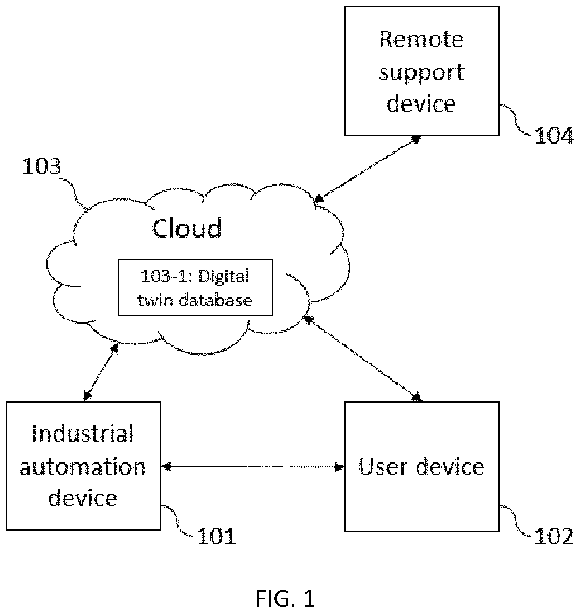

FIG. 1 illustrates a communication system to which some exemplary embodiments may be applied. Referring to FIG. 1, some exemplary embodiments may be based on wireless communications, such as 3G (third generation), 4G (fourth generation), LTE (long term evolution), LTE-A (long term evolution advanced), 5G (fifth generation), 5G NR (new radio), UMTS (universal mobile telecommunications system), EDGE (enhanced data rates for GSM evolution), WCDMA (wideband code division multiple access), Bluetooth, WLAN (wireless local area network), Wi-Fi, Li-Fi (light fidelity) or any other mobile or wireless network. The communication may also occur between nodes belonging to different but compatible systems, such as LTE and 5G. Some exemplary embodiments may also be based on wired networks.

FIG. 1 illustrates a system according to an exemplary embodiment. It should be noted that FIG. 1 illustrates a simplified system architecture only showing some elements and functional entities, all being logical units whose implementation may differ from what is shown. The connections shown in FIG. 1 are logical connections; the actual physical connections may be different. Data collection may use so-called master protocols, in which a master network node subscribes data from slaves (devices whose data it wants to have), and a slave device/network node sends its data to the receiver/master based on query or automatically based on subscription. It is apparent to a person skilled in the art that the systems also comprise other functions and structures. It should be appreciated that the functions, structures, elements, and protocols used in or for communication are irrelevant to the exemplary embodiments. Therefore, they need not be discussed in more detail here.

The system comprises an industrial automation device 101. The industrial automation device 101 may comprise, for example, a frequency converter, variable frequency drive, variable speed drive, motion drive, motion controller, motor, servomotor, AC/DC module, DC/AC module, DC/DC module, programmable logic controller (PLC), switch, soft starter, robot, or any other device used for industrial automation. For example, a variable frequency drive or a variable speed drive may be used to run machinery, such as a motor or a pump, at different speeds. The industrial automation device 101 may comprise or be connected to a controller, for example a proportional-integral-derivative (PID) controller. The controller may be configured to send control signals to the industrial automation device 101. The industrial automation device 101 may control highly dynamic industrial processes, in which for example the speed or torque applied to a motor has to be varied according to the needs of the industrial process.

The industrial automation device 101 may store, for example in an internal memory of the industrial automation device or in an external memory, information on control parameter settings, for example present values of control parameters such as controller gains, ramp times, motor data, limits, magnetization settings, signal filtering settings, and/or motor control settings. The industrial automation device 101 may also store operational information recorded during the operation of the industrial automation device, for example information on key performance indicators, such as load current histogram, torque ripple, torque vs. speed curves, and/or power vs. speed curves, temperature, voltage, current, and/or other information such as resonance frequencies and/or load inertias.

The industrial automation device 101 is equipped with a short-range communication interface to provide a connection to a user device 102. The connection between the industrial automation device 101 and the user device 102 may be provided, for example, by Bluetooth, Bluetooth low energy, ZigBee, wireless local area network (WLAN or WiFi), wireless mesh network, near field communication (NFC), light fidelity (Li-Fi), Ethernet, or any other wireless or wired connection. The short-range communication interface may be comprised, for example, in the industrial automation device 101 or in a control panel of the industrial automation device 101. The industrial automation device 101 may be configured to exchange information, i.e. to transmit and/or receive data, with the user device 102 via the connection. For example, the industrial automation device 101 may be configured to transmit notifications of faults or warnings to the user device 102 via the connection. The industrial automation device 101 may be further configured to apply control parameters and/or other configuration changes received from the user device 102.

Furthermore, the industrial automation device 101 may be connected to the internet via a network interface, such as 3G, 4G, LTE, LTE-A, 5G, 5G NR, UMTS, EDGE, WCDMA, WLAN, Wi-Fi, Li-Fi, or any other mobile, wireless or wired network. The network interface may be comprised, for example, in the industrial automation device 101 or in a control panel of the industrial automation device 101. The industrial automation device 101 may be configured to exchange information, i.e. to transmit and/or receive data, with a cloud server 103 via the network interface. The industrial automation device 101 may be connected to the cloud server 103 directly by cellular link, or via the user device 102, or via a separate gateway device such as an edge gateway. For example, the industrial automation device 101 may be configured to transmit warning and failure logs, real-time operational information, and/or the existing control parameter settings of the industrial automation device 101 to the cloud server 103. The existing control parameters refer to the control parameters currently applied at the industrial automation device 101.

The user device 102 may comprise user equipment such as a smartphone, mobile phone, tablet computer, laptop computer, desktop computer, or any other computing device. The user device 102 may be a local device located on-site at a close proximity to the industrial automation device 101. The user device 102 is equipped with a short-range communication interface to provide the connection to the industrial automation device 101. The user device is configured to exchange information, i.e. to transmit and/or receive data, with the industrial automation device 101. For example, the user device 102 may be configured to receive the notifications of faults and/or warnings from the industrial automation device 101 via the first connection 111. The user device 102 may be further configured to transmit control parameters and/or other configuration changes to the industrial automation device 101 via the connection.

Furthermore, the user device 102 may be connected to the internet via a network interface, such as 3G, 4G, LTE, LTE-A, 5G, 5G NR, UMTS, EDGE, WCDMA, WLAN, Wi-Fi, Li-Fi, Ethernet, or any other mobile, wireless or wired network. The user device 102 may be configured to exchange information, i.e. to transmit and/or receive data, with a cloud server 103 via the network interface.

The cloud server 103 is configured to exchange information, i.e. to transmit and/or receive data, with the industrial automation device 101 and/or with the user device 102. The cloud server 103 may be further configured to store the received data in an internal or external memory. The cloud server 103 is further configured to simulate the operation of the industrial automation device 101 by using a digital twin associated with the industrial automation device 101. The cloud server 103 comprises a digital twin database 103-1, which comprises the digital twin associated with the industrial automation device 101. For example, the digital twin may be a pre-defined model provided by the manufacturer of the industrial automation device 101. Alternatively, the digital twin may be a user-defined model. The digital twin database 103-1 may also comprise digital twins of other devices and/or systems.

The system further comprises a remote support device 104 located at a remote service center, for example. The remote support device 104 may comprise user equipment such as a smartphone, mobile phone, tablet computer, laptop computer, desktop computer, or any other computing device. The remote support device 104 may be connected to the internet via a network interface, such as 3G, 4G, LTE, LTE-A, 5G, 5G NR, UMTS, EDGE, WCDMA, WLAN, Wi-Fi, Li-Fi, Ethernet, or any other mobile, wireless or wired network. The remote support device 104 may be configured to exchange information, i.e. to transmit and/or receive data, with the cloud server 103 via the network interface. The remote support device 104 may be further configured to enable a remote support technician operating the remote support device 104 to provide remote support to a user of the user device 102 via the internet or via the cloud server 103. The remote support may include, for example, commissioning and/or troubleshooting associated with the industrial automation device 101. The remote support may be provided, for example, by a video chat application, a voice call application, or a messaging application configured in the remote support device 104 and in the user device 102.

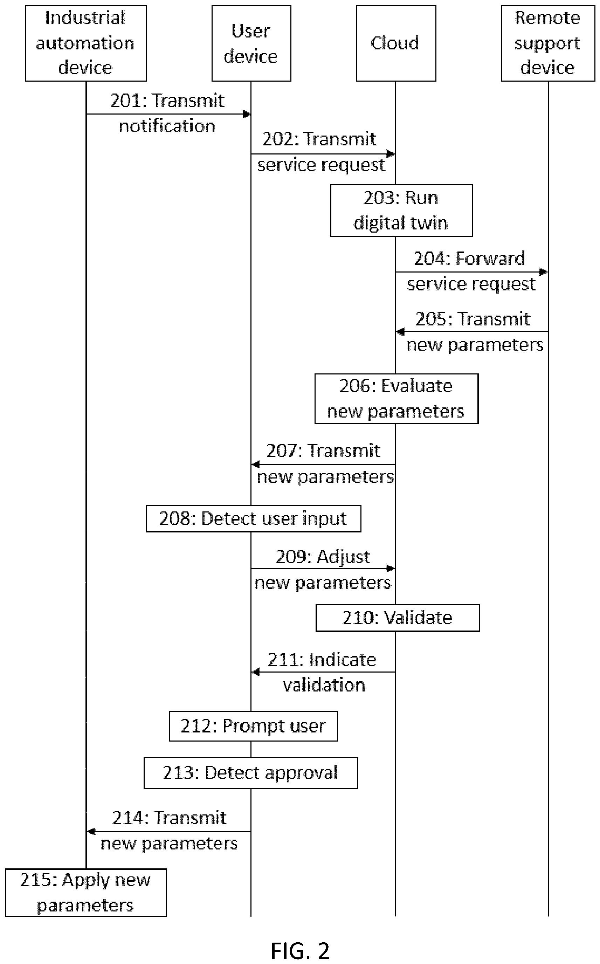

FIG. 2 illustrates a signaling diagram for a troubleshooting use case according to an exemplary embodiment. Referring to FIG. 2, an industrial automation device transmits 201 a notification to a user device for example for indicating a fault and/or warning associated with the industrial automation device. Alternatively, the notification may indicate a need to update control parameters of the industrial automation device in order to improve the performance, functionality or features of the industrial automation device. In this exemplary embodiment, the industrial automation device may have no direct internet connectivity. However, the industrial automation device is connected to the user device via a short-range connection, such as a Bluetooth or Wi-Fi connection, and thus the industrial automation device may use the user device as a gateway to the internet.

Upon receiving the notification, the user device establishes a connection to a cloud server via the internet. The connection to the cloud server may be established automatically upon receiving the notification, or the connection may be established upon receiving a user input for establishing the connection. The user device obtains, or downloads, relevant information from the industrial automation device, and transmits 202 one or more messages (or transactions) indicative of a service request associated with the industrial automation device to the cloud server.

The relevant information may comprise, for example, the existing control parameters, fault and warning logs, firmware variant, firmware version, device type code, and/or an identifier of the industrial automation device. The control parameters may comprise the inputs, outputs, limits and/or other settings used for controlling the industrial automation device. The control parameters may possibly also comprise some key values of other machinery, such as nameplate values of an electric motor connected to the industrial automation device.

The one or more messages may comprise, for example, the identifier of the industrial automation device, the existing control parameters of the industrial automation device, the fault and warning logs, one or more fault codes indicated by the industrial automation device in the notification 201, and/or a user-defined problem description.

The user of the user device may also define a system configuration of the automation system that the industrial automation device is part of. The system configuration may be indicated in the one or more messages. The system configuration may comprise information about the automation system, including for example mechanical parts, limit switches, sensors, etc. The industrial automation device may comprise PLC functions, which enable controlling the automation system with multiple drives and motors based on measured input from fieldbuses, sensors, and/or switches, as an example.

The user may also define a safe operating range for the industrial automation device and/or an industrial process that the industrial automation device is controlling. For example, the safe operating range may be defined by allowed minimum and maximum limits for outputs such as speed, acceleration and/or physical position associated with the industrial automation device and/or the industrial process. The physical position may cause safety issues for example with elevators or cranes, and thus it may need to be taken into account. The user may also define the intended control inputs, a range and/or sequence of the intended control inputs, and/or a relationship of the control inputs to the outputs, such as speed and/or acceleration associated with the industrial automation device. For example, the control inputs may comprise commands for starting, stopping, accelerating (i.e. increasing speed of), and/or decelerating (i.e. decreasing speed of) the rotation of an electric motor connected to the industrial automation device. The sequence of the intended control inputs indicates multiple consecutive control inputs that are entered in a row. The safe operating range, the control inputs, and/or the relationship between the control inputs and outputs may be indicated in the one or more messages.

Upon receiving the service request, the cloud server obtains, from its digital twin database, a digital twin of at least a subset of the automation system that the industrial automation device is part of, and runs 203, i.e. executes, the digital twin in order to simulate the industrial automation device by using the existing control parameters. Thus, simulation results with the existing control parameters are ready, when the service request investigation starts. In other words, the same fault(s) and/or warning(s) can be replicated by the digital twin as experienced by the actual industrial automation device, and the root cause of the issue can be investigated.

The cloud server forwards 204 the one or more messages indicative of the service request to a remote support device operated by a remote support technician. For example, the remote support technician may use the remote support device to select the service request from a queue of multiple service requests, which may also be referred to as tickets. The cloud server may also transmit other related information to the remote support device, such as the digital twin simulation results based on the existing control parameters comprising, for example, one or more fault codes and/or warnings, as well as one or more performance, load, and/or efficiency indices based on the simulation.

After receiving the service request, the remote support technician investigates the service request and the other related information, and defines a set of alternative control parameters (i.e. new control parameters) and/or other changes that the remote service technician proposes to be applied to the industrial automation device based on the service request and/or the other related information. For example, the remote support technician may also propose changes to the firmware of the industrial automation device, such as updating the firmware. The remote support device transmits 205 the set of alternative control parameters and/or the other proposed changes to the cloud server.

The cloud server evaluates 206 the set of alternative control parameters and/or the other proposed changes by updating them to the digital twin and simulating the effects of the changes based on the digital twin. In other words, the cloud server performs a validation to evaluate whether or not the set of alternative control parameters and/or the other proposed changes are safe to be applied to the actual industrial automation device by simulating the digital twin with multiple combinations of control inputs, while the digital twin is configured to use the set of alternative control parameters. Thus, the digital twin may be used as a test bench that runs all possible combinations of the control inputs, and evaluates whether the outputs (e.g. speed and/or acceleration) resulting from the tested control inputs stay within the safe operating range defined by the user. The evaluating may be based on the user-defined relationship between the control inputs and the outputs.

If the validation fails (i.e. the digital twin does not stay within the safe operating range during the simulation), the cloud server may transmit an indication to the remote support device indicating that the validation failed. The cloud server may also transmit a detailed report to the remote support device of any possible warnings and/or faults associated with the set of alternative control parameters based on the digital twin simulation. The remote support technician may then adjust the control parameters and/or the other changes iteratively until the cloud server successfully validates the changes as safe to be applied to the industrial automation device.

After successfully validating the set of alternative control parameters and/or the other proposed changes, the cloud server transmits 207 an indication to the user device indicating the set of alternative control parameters and/or the other proposed changes. The indication also indicates the simulation results, for example whether or not the digital twin stayed within the safe operating range during the simulation. The indication may also indicate the impact of the proposed changes for example in improved performance, efficiency and/or safety based on the digital twin simulation in comparison to the current settings of the industrial automation device. For example, the indication may comprise one or more performance indices, load indices, and/or efficiency indices based on the simulation.

After reviewing the proposed changes and the simulation results displayed by the user device based on the indication, the user may use the user device to approve, reject, or adjust the set of alternative control parameters and/or the other proposed changes. If the user approves the changes, then the user device transmits them to the industrial automation device to be applied at the industrial automation device. If the user rejects the changes, then the changes are not applied to the industrial automation device (i.e. the industrial automation device continues with its current settings).

If the user device detects 208 a user input for adjusting the set of alternative control parameters, the user device transmits 209 an adjusted set of alternative control parameters defined by the user to the cloud server for validating the adjusted set of alternative control parameters.

The cloud server validates 210 the adjusted set of alternative control parameters based on the digital twin by simulating the effects of the adjusted set of alternative control parameters based on the digital twin and the safe operating range. In other words, the cloud server evaluates whether the digital twin stays within the safe operating range when applying the adjusted set of alternative control parameters to the digital twin. After successfully validating the adjusted set of alternative control parameters, the cloud server transmits 211 an indication to the user device indicating the simulation results, for example that the adjusted set of alternative control parameters is safe to be applied to the industrial automation device based on the digital twin simulation performed by the cloud server.

After receiving the indication, the user device displays the simulation results to the user and prompts 212 the user to approve, reject or adjust the adjusted set of alternative control parameters. Upon detecting 213 a user input indicating an approval in response to the prompting, the user device transmits 214 the adjusted set of alternative control parameters and/or the other proposed changes to the industrial automation device together with an indication or command for applying the adjusted set of alternative control parameters and/or the other proposed changes. The industrial automation device then applies 215 the adjusted set of alternative control parameters and/or the other proposed changes. In other words, the industrial automation device may update its existing control parameters by replacing them with the adjusted set of alternative control parameters.

The exemplary embodiment described above by means of FIG. 2 may also be used in a similar manner for a commissioning use case, i.e. when commissioning a new industrial automation device into use. In this case, there may be no notification 201 transmitted from the industrial automation device to the user device. The user of the user device may define in the service request 202 that help for commissioning is requested, and the user may enter the details of the system configuration in or together with the service request.

In some exemplary embodiments, a live support session such as an audio call or a video chat may also be established between the user device and the remote support device in order for the remote support technician to help the user of the user device in real-time for troubleshooting or commissioning the industrial automation device.

In another exemplary embodiment, the industrial automation device may have direct internet connectivity, and thus be directly connected to the cloud server. In this case, a local short-range connection between the industrial automation device and the user device may not be needed. Device management of the industrial automation device may be performed, for example, through a cloud service portal comprised in the cloud server. The user device may communicate with the industrial automation device via the cloud service portal. The user device may also send the service request to the remote support device via the cloud service portal. The remote support device may obtain the relevant information via the cloud service portal, for example the existing control parameters and/or fault codes associated with the industrial automation device. The changes proposed by the remote support technician may be approved by the user of the user device by using the cloud service portal.

In another exemplary embodiment, the new control parameters and/or the other proposed changes may be applied to the industrial automation device automatically upon successful validation without requiring a user to approve the changes.

In another exemplary embodiment, a self-optimizing industrial automation device may automatically adjust its control parameters upon detecting a fault or warning or other need for adjusting the control parameters. The automatic adjusting may be performed based on a machine learning model, for example. The industrial automation device may then validate the adjusted control parameters by running a digital twin simulation of the industrial automation device locally in the industrial automation device, or by transmitting the adjusted control parameters to a cloud server for validation. If the industrial automation device performs the validation locally, then the industrial automation device may obtain the digital twin for example from an internal digital twin database, or from an external database such as a cloud-based digital twin database. Upon successful validation, the industrial automation device may apply the adjusted control parameters in its operation. Thus, this exemplary embodiment may not require any involvement of a user or a user device.

In another exemplary embodiment, a local validation tool may be used for validating the new control parameters and/or the other proposed changes by running a digital twin simulation locally in the user device or in a local on-premise server at the site where the industrial automation device is, instead of performing the validation remotely in a cloud server. The user device or the on-premise server may obtain the digital twin associated with the industrial automation device for example from an internal digital twin database, or from an external database such as a cloud-based digital twin database.

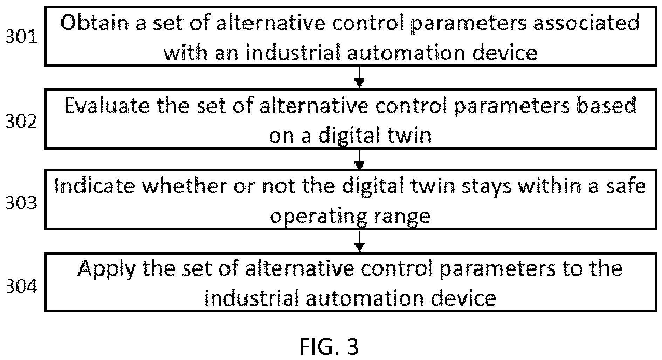

FIG. 3 illustrates a flow chart according to an exemplary embodiment. The functions illustrated in FIG. 3 may be performed by an apparatus such as, or comprised in, a user device, a cloud server, or an industrial automation device. Referring to FIG. 3, a set of alternative control parameters associated with the industrial automation device is obtained 301. For example, the set of alternative control parameters may be received as input from a user, or the set of alternative control parameters may be received in a transmission from another device. The set of alternative control parameters is evaluated 302 by simulating a digital twin associated with the industrial automation device with multiple combinations of inputs, while the digital twin is configured to use the set of alternative control parameters. The digital twin may be a pre-defined digital twin that is obtained from an internal or external database. The simulation may be run locally in the apparatus, or remotely in another device such as a cloud server. It is then indicated 303 whether or not the digital twin stays within a safe operating range based on the simulating. For example, if the digital twin stays within the safe operating range, then the indication 303 may be displayed to a user together with a prompt for requesting the user to approve the set of alternative control parameters to be applied to the industrial automation device. Alternatively, if the digital twin does not stay within the safe operating range, then the indication 303 may be displayed to a user together with a request for adjusting the set of alternative control parameters. The indication 303 may also be transmitted to another device instead of directly displaying it to a user. The set of alternative control parameters is applied 304 to the industrial automation device, if the digital twin stays within the safe operating range based on the simulating and/or if the user approves the set of alternative control parameters. For example, the set of alternative control parameters may be applied by transmitting the set of alternative control parameters to the industrial automation device along with an indication or command for applying the set of alternative control parameters at the industrial automation device.

The functions and/or blocks described above by means of FIGS. 2-3 are in no absolute chronological order, and some of them may be performed simultaneously or in an order differing from the described one. Other functions and/or blocks may also be executed between them or within them.

An exemplary scenario is presented in the following to describe the usage of an exemplary embodiment. A user device receives a notification message from an industrial automation device indicating that there is an issue with the industrial automation device that needs to be resolved. The user of the user device then sends a service request message from the user device to a remote support device via a cloud server to request assistance from a remote support technician. The remote support technician then checks the historical data of the industrial automation device. After studying the situation and the historical data, the remote support technician identifies that there is an issue with the field bus module setting. The remote support technician determines a first set of adjusted control parameters for the industrial automation device in order to fix the issue. However, the remote support technician knows that the changes might potentially create a safety hazard. Therefore, before recommending the first set of adjusted control parameters to the user, the remote support technician sends the first set of adjusted control parameters to the cloud server for validating the changes with a digital twin associated with the industrial automation device. The cloud server then sends an indication to the remote support device to indicate that the first set of adjusted control parameters is unsafe to be applied. The remote support technician then realizes that he had made a mistake with the first set of adjusted control parameters due to a hidden reference chain setting. The remote support technician determines a second set of adjusted parameters to correct the mistake, and sends it to the cloud server to be validated in the digital twin. This time, the cloud server sends an indication to the remote support device that the second set of adjusted control parameters is safe to be applied. The remote support technician then sends the second set of adjusted parameters to the user device via the cloud server, and suggests the user of the user device to apply the second set of adjusted parameters to the industrial automation device. The user of the user device approves the second set of adjusted parameters, and applies them to the industrial automation device.

A technical advantage provided by some exemplary embodiments is that they enable validating the alternative control parameter settings of an industrial automation device based on a digital twin before usage in the real world, and thus the control parameter settings can be updated in a more safe manner by only using parameters that have been validated successfully. Some exemplary embodiments may be used to detect and prevent human errors associated with parameter changes to industrial automation devices, and thus improve safety. For example, some exemplary embodiments may prevent an accidental start of a motor caused by incorrect parameters entered by a user. Furthermore, some exemplary embodiments may optimize the operation of the industrial automation device, and thus reduce power consumption and/or prevent mechanical wear of the industrial automation device.

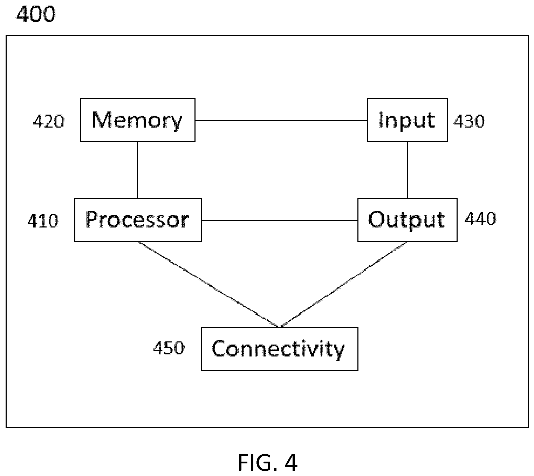

FIG. 4 illustrates an apparatus 400, which may be an apparatus such as, or comprised in, a user device or a cloud server or an on-premise server or an industrial automation device, according to an exemplary embodiment. The user device may also be referred to as a terminal device or UE or user equipment. The apparatus 400 comprises a processor 410. The processor 410 interprets computer program instructions and processes data. The processor 410 may comprise one or more programmable processors. The processor 410 may comprise programmable hardware with embedded firmware and may, alternatively or additionally, comprise one or more application-specific integrated circuits (ASICs).

The processor 410 is coupled to a memory 420. The processor is configured to read and write data to and from the memory 420. The memory 420 may comprise one or more memory units. The memory units may be volatile or non-volatile. It is to be noted that in some exemplary embodiments there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The memory 420 stores computer readable instructions that are executed by the processor 410. For example, non-volatile memory stores the computer readable instructions and the processor 410 executes the instructions using volatile memory for temporary storage of data and/or instructions.

The computer readable instructions may have been pre-stored to the memory 420 or, alternatively or additionally, they may be received, by the apparatus, via an electromagnetic carrier signal and/or may be copied from a physical entity such as a computer program product. Execution of the computer readable instructions causes the apparatus 400 to perform one or more of the functionalities described above.

In the context of this document, a "memory" or "computer-readable media" or "computer-readable medium" may be any non-transitory media or medium or means that can contain, store, communicate, propagate or transport the instructions for use by or in connection with an instruction execution system, apparatus, or device, such as a computer.

The apparatus 400 may further comprise, or be connected to, an input unit 430. The input unit 430 may comprise one or more interfaces for receiving input. The one or more interfaces may comprise for example one or more temperature, motion and/or orientation sensors, one or more cameras, one or more accelerometers, one or more microphones, one or more buttons and/or one or more touch detection units. Further, the input unit 430 may comprise an interface to which external devices may connect to.

The apparatus 400 may also comprise an output unit 440. The output unit may comprise or be connected to one or more displays capable of rendering visual content, such as a light emitting diode (LED) display, a liquid crystal display (LCD) and/or a liquid crystal on silicon (LCoS) display. The output unit 440 may further comprise one or more audio outputs. The one or more audio outputs may be for example loudspeakers.

The apparatus 400 further comprises a connectivity unit 450. The connectivity unit 450 enables wired and/or wireless connectivity to one or more external devices. The connectivity unit 450 may comprise at least one transmitter and at least one receiver that may be integrated to the apparatus 400 or that the apparatus 400 may be connected to. The at least one transmitter comprises at least one transmission antenna, and the at least one receiver comprises at least one receiving antenna. The connectivity unit 450 may comprise an integrated circuit or a set of integrated circuits that provide the communication capability for the apparatus 400. Alternatively, the connectivity may be a hardwired application-specific integrated circuit (ASIC). The connectivity unit 450 may comprise one or more components such as a power amplifier, digital front end (DFE), analog-to-digital converter (ADC), digital-to-analog converter (DAC), frequency converter, (de) modulator, and/or encoder/decoder circuitries, controlled by the corresponding controlling units.

It is to be noted that the apparatus 400 may further comprise various components not illustrated in FIG. 4. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s)), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of exemplary embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways. The embodiments are not limited to the exemplary embodiments described above, but may vary within the scope of the claims. Therefore, all words and expressions should be interpreted broadly, and they are intended to illustrate, not to restrict, the exemplary embodiments.

## Claims

1. An apparatus (400) comprising means for:
obtaining (301) a set of alternative control parameters associated with an industrial automation device (101);
evaluating (302) the set of alternative control parameters by simulating a digital twin associated with the industrial automation device (101) with multiple combinations of inputs, while the digital twin is configured to use the set of alternative control parameters, wherein the multiple combinations of inputs comprise at least control inputs, which comprise commands for starting, stopping, accelerating, and decelerating rotation of an electric motor connected to the industrial automation device (101);
indicating (303) whether or not the digital twin stays within a safe operating range based on the simulating; and
applying (304) the set of alternative control parameters to the industrial automation device (101).

2. An apparatus (400) according to claim 1, further comprising means for:
adjusting (209) the set of alternative control parameters before applying the set of alternative control parameters to the industrial automation device (101).

3. An apparatus (400) according to any preceding claim, further comprising means for:
prompting (212) a user to approve the set of alternative control parameters before applying the set of alternative control parameters to the industrial automation device (101);
wherein the set of alternative control parameters is applied to the industrial automation device (101) upon detecting (213) a user input for approving the set of alternative control parameters in response to the prompting.

4. An apparatus (400) according to any preceding claim, further comprising means for:
indicating (207) an impact of the set of alternative control parameters in performance, efficiency and/or safety associated with the industrial automation device (101) based on the simulating.

5. An apparatus (400) according to any preceding claim, further comprising means for:
transmitting (202, 204), to a remote support device (104) or to a cloud server (103), one or more messages indicative of a service request associated with the industrial automation device (101), wherein the one or more messages comprise at least one of: a set of control parameters currently applied at the industrial automation device (101), one or more fault codes associated with the industrial automation device (101), the safe operating range, a range of the inputs, a sequence of the inputs, and/or a system configuration associated with the industrial automation device (101);
wherein the set of alternative control parameters is obtained by receiving (205, 207) the set of alternative control parameters from the remote support device (104) or from the cloud server (103) in response to the one or more messages indicative of the service request.

6. An apparatus (400) according to any preceding claim, wherein the safe operating range defines an allowed minimum limit and/or an allowed maximum limit for one or more outputs associated with the industrial automation device;
wherein a user-defined relationship between the control inputs and the one or more outputs is used to determine whether the digital twin stays within the safe operating range.

7. An apparatus (400) according to any preceding claim, wherein the safe operating range comprises at least one of: a minimum limit and a maximum limit for a speed associated with the industrial automation device (101), a minimum limit and a maximum limit for an acceleration associated with the industrial automation device (101), and/or a minimum limit and a maximum limit for a position associated with the industrial automation device (101).

8. An apparatus (400) according to any preceding claim, wherein the apparatus is comprised in a cloud server (103) or in a local on-premise server or in a user device (102) or in the industrial automation device (101).

9. A method comprising:
obtaining (301) a set of alternative control parameters associated with an industrial automation device (101);
evaluating (302) the set of alternative control parameters by simulating a digital twin associated with the industrial automation device (101) with multiple combinations of inputs, while the digital twin is configured to use the set of alternative control parameters, wherein the multiple combinations of inputs comprise at least control inputs, which comprise commands for starting, stopping, accelerating, and decelerating rotation of an electric motor connected to the industrial automation device (101);
indicating (303) whether or not the digital twin stays within a safe operating range based on the simulating; and
applying (304) the set of alternative control parameters to the industrial automation device (101).

10. A computer program comprising instructions for causing an apparatus (400) to perform at least the following:
obtain (301) a set of alternative control parameters associated with an industrial automation device (101);
evaluate (302) the set of alternative control parameters by simulating a digital twin associated with the industrial automation device (101) with multiple combinations of inputs, while the digital twin is configured to use the set of alternative control parameters, wherein the multiple combinations of inputs comprise at least control inputs, which comprise commands for starting, stopping, accelerating, and decelerating rotation of an electric motor connected to the industrial automation device (101);
indicate (303) whether or not the digital twin stays within a safe operating range based on the simulating; and
apply (304) the set of alternative control parameters to the industrial automation device (101).

11. A system comprising at least an industrial automation device (101), a user device (102), a cloud server (103), and a remote support device (104);
wherein the user device (102) comprises means for:
transmitting (202), to the cloud server (103), one or more messages indicative of a service request associated with the industrial automation device (101);
wherein the cloud server (103) comprises means for:
receiving (202), from the user device (102), the one or more messages indicative of the service request associated with the industrial automation device (101);
transmitting (204), to the remote support device (104), at least a subset of the one or more messages indicative of the service request associated with the industrial automation device;
receiving (205), from the remote support device (104), a set of alternative control parameters associated with the industrial automation device (101);
evaluating (206) the set of alternative control parameters by simulating a digital twin associated with the industrial automation device (101) with multiple combinations of inputs, while the digital twin is configured to use the set of alternative control parameters, wherein the multiple combinations of inputs comprise at least control inputs, which comprise commands for starting, stopping, accelerating, and decelerating rotation of an electric motor connected to the industrial automation device (101);
transmitting (207), to the user device (102) and/or to the industrial automation device (101), the set of alternative control parameters; and
transmitting, to the user device (102) and/or to the industrial automation device (101), a first indication indicating whether or not the digital twin stays within a safe operating range based on the simulating;
wherein the industrial automation device (101) comprises means for:
receiving (214), from the user device (102) or from the cloud server (103), the set of alternative control parameters; and
applying (215) the set of alternative control parameters.

12. A system according to claim 11, wherein the industrial automation device (101) further comprises means for:
transmitting (201), to the user device (102), a notification comprising one or more fault codes associated with the industrial automation device (101); and
transmitting (201), to the user device (102), a set of control parameters currently applied at the industrial automation device (101);
wherein the user device (102) further comprises means for:
receiving (201), from the industrial automation device (101), the notification and the set of control parameters;
wherein the one or more messages indicative of the service request comprise at least the one or more fault codes associated with the industrial automation device (101) and the set of control parameters currently applied at the industrial automation device (101).

13. A system according to any of claims 11-12, wherein the cloud server (103) further comprises means for:
transmitting, to the remote support device (104), if the digital twin does not stay within the safe operating range based on the simulating, a request for adjusting the set of alternative control parameters;
receiving, from the remote support device (104), a first adjusted set of alternative control parameters; and
evaluating the first adjusted set of alternative control parameters by simulating the digital twin associated with the industrial automation device (101) with the multiple combinations of inputs, while the digital twin is configured to use the first adjusted set of alternative control parameters;
wherein the set of alternative control parameters transmitted to the user device (102) and/or to the industrial automation device (101) comprises the first adjusted set of alternative control parameters;
wherein the remote support device (104) further comprises means for:
receiving, from the cloud server (103), the request for adjusting the set of alternative control parameters;
adjusting the set of alternative control parameters to the first adjusted set of alternative control parameters; and
transmitting, to the cloud server (103), the first adjusted set of alternative control parameters.

14. A system according to any of claims 11-13, wherein the user device (102) further comprises means for:
adjusting (209) the set of alternative control parameters to a second adjusted set of alternative control parameters;
transmitting (209), to the cloud server (103), the second adjusted set of alternative control parameters; and
transmitting, to the cloud server (103), a request for validating the second adjusted set of alternative control parameters;
wherein the cloud server (103) further comprises means for:
receiving (209), from the user device (102), the second adjusted set of alternative control parameters;
receiving, from the user device (102), the request for validating the second adjusted set of alternative control parameters;
based on the request, evaluating (210) the set of alternative control parameters by simulating the digital twin associated with the industrial automation device (101) with the multiple combinations of inputs, while the digital twin is configured to use the second adjusted set of alternative control parameters; and
transmitting (211), to the user device (102), a second indication indicating whether or not the digital twin stays within the safe operating range based on the simulating with the second adjusted set of alternative control parameters;
wherein the set of alternative control parameters applied by the industrial automation device (101) comprises the second adjusted set of control parameters, if the second indication indicates that the digital twin stays within the safe operating range.

## Patentansprüche

1. Vorrichtung (400), die Mittel für Folgendes umfasst:
Erhalten (301) eines Satzes alternativer Steuerungsparameter, die mit einer industriellen Automatisierungseinrichtung (101) assoziiert sind;
Bewerten (302) des Satzes alternativer Steuerungsparameter durch Simulieren eines digitalen Zwillings, der mit der industriellen Automatisierungseinrichtung (101) assoziiert ist, mit mehreren Kombinationen von Eingaben, während der digitale Zwilling konfiguriert ist, um den Satz alternativer Steuerungsparameter zu nutzen, wobei die mehreren Kombinationen von Eingaben mindestens Steuerungseingaben umfassen, die Befehle zum Starten, Stoppen, Beschleunigen und Verlangsamen der Drehung eines mit der industriellen Automatisierungseinrichtung (101) verbundenen Elektromotors umfassen;
Angeben (303), ob der digitale Zwilling basierend auf dem Simulieren innerhalb eines sicheren Betriebsbereichs bleibt oder nicht; und
Anwenden (304) des Satzes alternativer Steuerungsparameter auf die industrielle Automatisierungseinrichtung (101).

2. Vorrichtung (400) nach Anspruch 1, die ferner Mittel für Folgendes umfasst:
Anpassen (209) des Satzes alternativer Steuerungsparameter vor dem Anwenden des Satzes alternativer Steuerungsparameter auf die industrielle Automatisierungseinrichtung (101).

3. Vorrichtung (400) nach einem der vorhergehenden Ansprüche, die ferner Mittel für Folgendes umfasst:
Auffordern (212) eines Benutzers zum Genehmigen des Satzes alternativer Steuerungsparameter vor dem Anwenden des Satzes alternativer Steuerungsparameter auf die industrielle Automatisierungseinrichtung (101);
wobei der Satz alternativer Steuerungsparameter auf die industrielle Automatisierungseinrichtung (101) nach dem Erkennen (213) einer Benutzereingabe zum Genehmigen des Satzes alternativer Steuerungsparameter als Reaktion auf das Auffordern angewendet wird.

4. Vorrichtung (400) nach einem der vorhergehenden Ansprüche, die ferner Mittel für Folgendes umfasst:
Angeben (207) eines Einflusses des Satzes alternativer Steuerungsparameter hinsichtlich der Performanz, des Wirkungsgrads und/oder der Sicherheit, die mit der industriellen Automatisierungseinrichtung (101) assoziiert sind, basierend auf dem Simulieren.

5. Vorrichtung (400) nach einem der vorhergehenden Ansprüche, die ferner Mittel für Folgendes umfasst:
Übertragen (202, 204), an eine entfernte Supporteinrichtung (104) oder an einen Cloud-Server (103), einer oder mehrerer Nachrichten, die eine mit der industriellen Automatisierungseinrichtung (101) assoziierte Dienstanforderung angeben, wobei die eine oder die mehreren Nachrichten mindestens eines von Folgendem umfassen: einem Satz Steuerungsparameter, die momentan an der industriellen Automatisierungseinrichtung (101) angewendet werden, einem oder mehreren Fehlercodes, die mit der industriellen Automatisierungseinrichtung (101) assoziiert sind, dem sicheren Betriebsbereich, einer Reihe von Eingaben, einer Folge der Eingaben und/oder einer Systemkonfiguration, die mit der industriellen Automatisierungseinrichtung (101) assoziiert ist;
wobei der Satz alternativer Steuerungsparameter durch Empfangen (205, 207) des Satzes alternativer Steuerungsparameter von der entfernten Supporteinrichtung (104) oder von dem Cloud-Server (103) als Reaktion auf die eine oder die mehreren Nachrichten, die die Dienstanforderung angeben, erhalten wird.

6. Vorrichtung (400) nach einem der vorhergehenden Ansprüche, wobei der sichere Betriebsbereich eine zulässige Mindestgrenze und/oder eine zulässige Höchstgrenze für eine oder mehrere Ausgaben, die mit der industriellen Automatisierungseinrichtung assoziiert sind, definiert;
wobei eine benutzerdefinierte Beziehung zwischen den Steuerungseingaben und der einen oder den mehreren Ausgaben genutzt wird, um zu bestimmen, ob der digitale Zwilling innerhalb des sicheren Betriebsbereichs bleibt.

7. Vorrichtung (400) nach einem der vorhergehenden Ansprüche, wobei der sichere Betriebsbereich mindestens eines von Folgendem umfasst: einer Mindestgrenze und einer Höchstgrenze für eine mit der industriellen Automatisierungseinrichtung (101) assoziierte Geschwindigkeit, einer Mindestgrenze und einer Höchstgrenze für eine mit der industriellen Automatisierungseinrichtung (101) assoziierte Beschleunigung und/oder einer Mindestgrenze und einer Höchstgrenze für eine mit der industriellen Automatisierungseinrichtung (101) assoziierte Position.

8. Vorrichtung (400) nach einem der vorhergehenden Ansprüche, wobei die Vorrichtung in einem Cloud-Server (103) oder in einem lokalen Server vor Ort oder in einer Benutzereinrichtung (102) oder in der industriellen Automatisierungseinrichtung (101) enthalten ist.

9. Verfahren, das Folgendes umfasst:
Erhalten (301) eines Satzes alternativer Steuerungsparameter, die mit einer industriellen Automatisierungseinrichtung (101) assoziiert sind;
Bewerten (302) des Satzes alternativer Steuerungsparameter durch Simulieren eines digitalen Zwillings, der mit der industriellen Automatisierungseinrichtung (101) assoziiert ist, mit mehreren Kombinationen von Eingaben, während der digitale Zwilling konfiguriert ist, um den Satz alternativer Steuerungsparameter zu nutzen, wobei die mehreren Kombinationen von Eingaben mindestens Steuerungseingaben umfassen, die Befehle zum Starten, Stoppen, Beschleunigen und Verlangsamen der Drehung eines mit der industriellen Automatisierungseinrichtung (101) verbundenen Elektromotors umfassen;
Angeben (303), ob der digitale Zwilling basierend auf dem Simulieren innerhalb eines sicheren Betriebsbereichs bleibt oder nicht; und
Anwenden (304) des Satzes alternativer Steuerungsparameter auf die industrielle Automatisierungseinrichtung (101).

10. Computerprogramm, das Anweisungen umfasst, um zu bewirken, dass eine Vorrichtung (400) mindestens die folgenden Vorgänge durchführt:
Erhalten (301) eines Satzes alternativer Steuerungsparameter, die mit einer industriellen Automatisierungseinrichtung (101) assoziiert sind;
Bewerten (302) des Satzes alternativer Steuerungsparameter durch Simulieren eines digitalen Zwillings, der mit der industriellen Automatisierungseinrichtung (101) assoziiert ist, mit mehreren Kombinationen von Eingaben, während der digitale Zwilling konfiguriert ist, um den Satz alternativer Steuerungsparameter zu nutzen, wobei die mehreren Kombinationen von Eingaben mindestens Steuerungseingaben umfassen, die Befehle zum Starten, Stoppen, Beschleunigen und Verlangsamen der Drehung eines mit der industriellen Automatisierungseinrichtung (101) verbundenen Elektromotors umfassen;
Angeben (303), ob der digitale Zwilling basierend auf dem Simulieren innerhalb eines sicheren Betriebsbereichs bleibt oder nicht; und
Anwenden (304) des Satzes alternativer Steuerungsparameter auf die industrielle Automatisierungseinrichtung (101).

11. System, das mindestens eine industrielle Automatisierungseinrichtung (101), eine Benutzereinrichtung (102), einen Cloud-Server (103) und eine entfernte Supporteinrichtung (104) umfasst;
wobei die Benutzereinrichtung (102) Mittel für Folgendes umfasst:
Übertragen (202), an den Cloud-Server (103), einer oder mehrerer Nachrichten, die eine mit der industriellen Automatisierungseinrichtung (101) assoziierte Dienstanforderung angeben;
wobei der Cloud-Server (103) Mittel für Folgendes umfasst:
Empfangen (202), von der Benutzereinrichtung (102), der einen oder der mehreren Nachrichten, die die mit der industriellen Automatisierungseinrichtung (101) assoziierte Dienstanforderung angeben;
Übertragen (204), an die entfernte Supporteinrichtung (104), mindestens eines Teilsatzes der einen oder der mehreren Nachrichten, die die mit der industriellen Automatisierungseinrichtung assoziierte Dienstanforderung angeben;
Empfangen (205), von der entfernten Supporteinrichtung (104), eines Satzes alternativer Steuerungsparameter, die mit der industriellen Automatisierungseinrichtung (101) assoziiert sind;
Bewerten (206) des Satzes alternativer Steuerungsparameter durch Simulieren eines digitalen Zwillings, der mit der industriellen Automatisierungseinrichtung (101) assoziiert ist, mit mehreren Kombinationen von Eingaben, während der digitale Zwilling konfiguriert ist, um den Satz alternativer Steuerungsparameter zu nutzen, wobei die mehreren Kombinationen von Eingaben mindestens Steuerungseingaben umfassen, die Befehle zum Starten, Stoppen, Beschleunigen und Verlangsamen der Drehung eines mit der industriellen Automatisierungseinrichtung (101) verbundenen Elektromotors umfassen;
Übertragen (207), an die Benutzereinrichtung (102) und/oder an die industrielle Automatisierungseinrichtung (101), des Satzes alternativer Steuerungsparameter; und Übertragen, an die Benutzereinrichtung (102) und/oder an die industrielle Automatisierungseinrichtung (101), einer ersten Angabe, die angibt, ob der digitale Zwilling basierend auf dem Simulieren innerhalb eines sicheren Betriebsbereichs bleibt oder nicht; und
wobei die industrielle Automatisierungseinrichtung (101) Mittel für Folgendes umfasst:
Empfangen (214), von der Benutzereinrichtung (102) oder von dem Cloud-Server (103), des Satzes alternativer Steuerungsparameter; und
Anwenden (215) des Satzes alternativer Steuerungsparameter.

12. System nach Anspruch 11, wobei die industrielle Automatisierungseinrichtung (101) ferner Mittel für Folgendes umfasst:
Übertragen (201), an die Benutzereinrichtung (102), einer Benachrichtigung, die einen oder mehrere Fehlercodes, die mit der industriellen Automatisierungseinrichtung (101) assoziiert sind, umfasst; und
Übertragen (201), an die Benutzereinrichtung (102), eines Satzes Steuerungsparameter, die momentan an der industriellen Automatisierungseinrichtung (101) angewendet werden;
wobei die Benutzereinrichtung (102) ferner Mittel für Folgendes umfasst:
Empfangen (201), von der industriellen Automatisierungseinrichtung (101), der Benachrichtigung und des Satzes Steuerungsparameter;
wobei die eine oder die mehreren Nachrichten, die die Dienstanforderung angeben, mindestens den einen oder die mehreren Fehlercodes, die mit der industriellen Automatisierungseinrichtung (101) assoziiert sind, und den Satz Steuerungsparameter, die momentan an der industriellen Automatisierungseinrichtung (101) angewendet werden, umfassen.

13. System nach einem der Ansprüche 11-12, wobei der Cloud-Server (103) ferner Mittel für Folgendes umfasst:
Übertragen, an die entfernte Supporteinrichtung (104), wenn der digitale Zwilling basierend auf dem Simulieren nicht innerhalb des sicheren Betriebsbereichs bleibt, einer Anforderung zum Anpassen des Satzes alternativer Steuerungsparameter;
Empfangen, von der entfernten Supporteinrichtung (104), eines ersten angepassten Satzes alternativer Steuerungsparameter; und
Bewerten des ersten angepassten Satzes alternativer Steuerungsparameter durch Simulieren des digitalen Zwillings, der mit der industriellen Automatisierungseinrichtung (101) assoziiert ist, mit den mehreren Kombinationen von Eingaben, während der digitale Zwilling konfiguriert ist, um den ersten angepassten Satz alternativer Steuerungsparameter zu nutzen;
wobei der Satz alternativer Steuerungsparameter, die an die Benutzereinrichtung (102) und/oder an die industrielle Automatisierungseinrichtung (101) übertragen werden, den ersten angepassten Satz alternativer Steuerungsparameter umfasst;
wobei die entfernte Supporteinrichtung (104) ferner Mittel für Folgendes umfasst:
Empfangen, von dem Cloud-Server (103), der Anforderung zum Anpassen des Satzes alternativer Steuerungsparameter;
Anpassen des Satzes alternativer Steuerungsparameter an den ersten angepassten Satz alternativer Steuerungsparameter; und
Übertragen, an den Cloud-Server (103), des ersten angepassten Satzes alternativer Steuerungsparameter.

14. System nach einem der Ansprüche 11-13, wobei die Benutzereinrichtung (102) ferner Mittel für Folgendes umfasst:
Anpassen (209) des Satzes alternativer Steuerungsparameter an einen zweiten angepassten Satz alternativer Steuerungsparameter;
Übertragen (209), an den Cloud-Server (103), des zweiten angepassten Satzes alternativer Steuerungsparameter; und
Übertragen, an den Cloud-Server (103), einer Anforderung zum Validieren des zweiten angepassten Satzes alternativer Steuerungsparameter;
wobei der Cloud-Server (103) ferner Mittel für Folgendes umfasst:
Empfangen (209), von der Benutzereinrichtung (102), des zweiten angepassten Satzes alternativer Steuerungsparameter;
Empfangen, von der Benutzereinrichtung (102), der Anforderung zum Validieren des zweiten angepassten Satzes alternativer Steuerungsparameter;
basierend auf der Anforderung Bewerten (210) des Satzes alternativer Steuerungsparameter durch Simulieren des digitalen Zwillings, der mit der industriellen Automatisierungseinrichtung (101) assoziiert ist, mit den mehreren Kombinationen von Eingaben, während der digitale Zwilling konfiguriert ist, um den zweiten angepassten Satz alternativer Steuerungsparameter zu nutzen; und
Übertragen (211), an die Benutzereinrichtung (102), einer zweiten Angabe, die angibt, ob der digitale Zwilling basierend auf dem Simulieren mit dem zweiten angepassten Satz alternativer Steuerungsparameter innerhalb des sicheren Betriebsbereichs bleibt oder nicht;
wobei der Satz alternativer Steuerungsparameter, der durch die industrielle Automatisierungseinrichtung (101) angewendet wird, den zweiten angepassten Satz Steuerungsparameter umfasst, wenn die zweite Angabe angibt, dass der digitale Zwilling innerhalb des sicheren Betriebsbereichs bleibt.

## Revendications

1. Appareil (400) comportant des moyens destinés à :
obtenir (301) un ensemble de paramètres de commande de substitution associés à un dispositif (101) d'automation industrielle ;
évaluer (302) l'ensemble de paramètres de commande de substitution en simulant un jumeau numérique associé au dispositif (101) d'automation industrielle avec de multiples combinaisons d'entrées, tandis que le jumeau numérique est configuré pour utiliser l'ensemble de paramètres de commande de substitution, les multiples combinaisons d'entrées comportant au moins des entrées de commande, qui comportent des consignes de démarrage, d'arrêt, d'accélération et de décélération de la rotation d'un moteur électrique relié au dispositif (101) d'automation industrielle ;
indiquer (303) si le jumeau numérique reste ou non à l'intérieur d'une plage de fonctionnement sûr d'après la simulation ; et
appliquer (304) l'ensemble de paramètres de commande de substitution au dispositif (101) d'automation industrielle.

2. Appareil (400) selon la revendication 1, comportant en outre des moyens destinés à :
ajuster (209) l'ensemble de paramètres de commande de substitution avant d'appliquer l'ensemble de paramètres de commande de substitution au dispositif (101) d'automation industrielle.

3. Appareil (400) selon l'une quelconque des revendications précédentes, comportant en outre des moyens destinés à :
inviter (212) un utilisateur à approuver l'ensemble de paramètres de commande de substitution avant d'appliquer l'ensemble de paramètres de commande de substitution au dispositif (101) d'automation industrielle ;
l'ensemble de paramètres de commande de substitution étant appliqué au dispositif (101) d'automation industrielle suite à la détection (213) d'une entrée d'utilisateur servant à approuver l'ensemble de paramètres de commande de substitution en réponse à l'invite.

4. Appareil (400) selon l'une quelconque des revendications précédentes, comportant en outre des moyens destinés à :
indiquer (207) un impact de l'ensemble de paramètres de commande de substitution sur les performances, le rendement et/ou la sécurité associés au dispositif (101) d'automation industrielle d'après la simulation.

5. Appareil (400) selon l'une quelconque des revendications précédentes, comportant en outre des moyens destinés à :
transmettre (202, 204), à un dispositif (104) de soutien à distance ou à un serveur (103) en nuage, un ou plusieurs messages indicatifs d'une demande de service associée au dispositif (101) d'automation industrielle, le ou les messages comportant au moins un élément parmi: un ensemble de paramètres de commande actuellement appliqués au niveau du dispositif (101) d'automation industrielle, un ou plusieurs codes de défauts associés au dispositif (101) d'automation industrielle, la plage de fonctionnement sûr, une étendue des entrées, une succession des entrées, et/ou une configuration de système associée au dispositif (101) d'automation industrielle ;
l'ensemble de paramètres de commande de substitution étant obtenu en recevant (205, 207) l'ensemble de paramètres de commande de substitution en provenance du dispositif (104) de soutien à distance ou en provenance du serveur (103) en nuage en réponse au(x) message(s) indicatif(s) de la demande de service.

6. Appareil (400) selon l'une quelconque des revendications précédentes, la plage de fonctionnement sûr définissant une limite minimum autorisée et/ou une limite maximum autorisée pour une ou plusieurs sorties associées au dispositif d'automation industrielle ;
une relation définie par l'utilisateur entre les entrées de commande et la ou les sorties étant utilisée pour déterminer si le jumeau numérique reste à l'intérieur de la plage de fonctionnement sûr.

7. Appareil (400) selon l'une quelconque des revendications précédentes, la plage de fonctionnement sûr comportant au moins une limite parmi: une limite minimum et une limite maximum pour une vitesse associée au dispositif (101) d'automation industrielle, une limite minimum et une limite maximum pour une accélération associée au dispositif (101) d'automation industrielle, et/ou une limite minimum et une limite maximum pour une position associée au dispositif (101) d'automation industrielle.

8. Appareil (400) selon l'une quelconque des revendications précédentes, l'appareil étant compris dans un serveur (103) en nuage ou dans un serveur local sur les lieux ou dans un dispositif (102) d'utilisateur ou dans le dispositif (101) d'automation industrielle.

9. Procédé comportant les étapes consistant à :
obtenir (301) un ensemble de paramètres de commande de substitution associés à un dispositif (101) d'automation industrielle ;
évaluer (302) l'ensemble de paramètres de commande de substitution en simulant un jumeau numérique associé au dispositif (101) d'automation industrielle avec de multiples combinaisons d'entrées, tandis que le jumeau numérique est configuré pour utiliser l'ensemble de paramètres de commande de substitution, les multiples combinaisons d'entrées comportant au moins des entrées de commande, qui comportent des consignes de démarrage, d'arrêt, d'accélération et de décélération de la rotation d'un moteur électrique relié au dispositif (101) d'automation industrielle ;
indiquer (303) si le jumeau numérique reste ou non à l'intérieur d'une plage de fonctionnement sûr d'après la simulation ; et
appliquer (304) l'ensemble de paramètres de commande de substitution au dispositif (101) d'automation industrielle.

10. Programme informatique comportant des instructions destinées à amener un appareil (400) à réaliser au moins les actions suivantes :
obtenir (301) un ensemble de paramètres de commande de substitution associé à un dispositif (101) d'automation industrielle ;
évaluer (302) l'ensemble de paramètres de commande de substitution en simulant un jumeau numérique associé au dispositif (101) d'automation industrielle avec de multiples combinaisons d'entrées, tandis que le jumeau numérique est configuré pour utiliser l'ensemble de paramètres de commande de substitution, les multiples combinaisons d'entrées comportant au moins des entrées de commande, qui comportent des consignes de démarrage, d'arrêt, d'accélération et de décélération de la rotation d'un moteur électrique relié au dispositif (101) d'automation industrielle ;
indiquer (303) si le jumeau numérique reste ou non à l'intérieur d'une plage de fonctionnement sûr d'après la simulation ; et
appliquer (304) l'ensemble de paramètres de commande de substitution au dispositif (101) d'automation industrielle.

11. Système comportant au moins un dispositif (101) d'automation industrielle, un dispositif (102) d'utilisateur, un serveur (103) en nuage, et un dispositif (104) de soutien à distance ;
le dispositif (102) d'utilisateur comportant des moyens destinés à :
transmettre (202), au serveur (103) en nuage, un ou plusieurs messages indicatifs d'une demande de service associée au dispositif (101) d'automation industrielle ;
le serveur (103) en nuage comportant des moyens destinés à :
recevoir (202), en provenance du dispositif (102) d'utilisateur, le ou les messages indicatifs de la demande de service associée au dispositif (101) d'automation industrielle ;
transmettre (204), au dispositif (104) de soutien à distance, au moins un sous-ensemble du ou des messages indicatifs de la demande de service associée au dispositif d'automation industrielle ;
recevoir (205), en provenance du dispositif (104) de soutien à distance, un ensemble de paramètres de commande de substitution associé au dispositif (101) d'automation industrielle ;
évaluer (206) l'ensemble de paramètres de commande de substitution en simulant un jumeau numérique associé au dispositif (101) d'automation industrielle avec de multiples combinaisons d'entrées, tandis que le jumeau numérique est configuré pour utiliser l'ensemble de paramètres de commande de substitution, les multiples combinaisons d'entrées comportant au moins des entrées de commande, qui comportent des consignes de démarrage, d'arrêt, d'accélération et de décélération de la rotation d'un moteur électrique relié au dispositif (101) d'automation industrielle ;
transmettre (207), au dispositif (102) d'utilisateur et/ou au dispositif (101) d'automation industrielle, l'ensemble de paramètres de commande de substitution ; et
transmettre, au dispositif (102) d'utilisateur et/ou au dispositif (101) d'automation industrielle, une première indication indiquant si le jumeau numérique reste ou non à l'intérieur d'une plage de fonctionnement sûr d'après la simulation ;
le dispositif (101) d'automation industrielle comportant des moyens destinés à :
recevoir (214), en provenance du dispositif (102) d'utilisateur ou en provenance du serveur (103) en nuage, l'ensemble de paramètres de commande de substitution ; et
appliquer (215) l'ensemble de paramètres de commande de substitution.

12. Système selon la revendication 11, le dispositif (101) d'automation industrielle comportant en outre des moyens destinés à :
transmettre (201), au dispositif (102) d'utilisateur, une notification comportant un ou plusieurs codes de défauts associés au dispositif (101) d'automation industrielle ; et
transmettre (201), au dispositif (102) d'utilisateur, un ensemble de paramètres de commande actuellement appliqués au niveau du dispositif (101) d'automation industrielle ;
le dispositif (102) d'utilisateur comportant en outre des moyens destinés à :
recevoir (201), en provenance du dispositif (101) d'automation industrielle, la notification et l'ensemble de paramètres de commande ;
le ou les messages indicatifs de la demande de service comportant au moins le ou les codes de défauts associés au dispositif (101) d'automation industrielle et l'ensemble de paramètres de commande actuellement appliqués au niveau du dispositif (101) d'automation industrielle.

13. Système selon l'une quelconque des revendications 11 à 12, le serveur (103) en nuage comportant en outre des moyens destinés à :
transmettre, au dispositif (104) de soutien à distance, si le jumeau numérique ne reste pas à l'intérieur de la plage de fonctionnement sûr d'après la simulation, une demande d'ajustement de l'ensemble de paramètres de commande de substitution ;
recevoir, en provenance du dispositif (104) de soutien à distance, un premier ensemble ajusté de paramètres de commande de substitution ; et
évaluer le premier ensemble ajusté de paramètres de commande de substitution en simulant le jumeau numérique associé au dispositif (101) d'automation industrielle avec les multiples combinaisons d'entrées, tandis que le jumeau numérique est configuré pour utiliser le premier ensemble ajusté de paramètres de commande de substitution ;
l'ensemble de paramètres de commande de substitution transmis au dispositif (102) d'utilisateur et/ou au dispositif (101) d'automation industrielle comportant le premier ensemble ajusté de paramètres de commande de substitution ;
le dispositif (104) de soutien à distance comportant en outre des moyens destinés à :
recevoir, en provenance du serveur (103) en nuage, la demande d'ajustement de l'ensemble de paramètres de commande de substitution ;
régler l'ensemble de paramètres de commande de substitution sur le premier ensemble ajusté de paramètres de commande de substitution ; et
transmettre, au serveur (103) en nuage, le premier ensemble ajusté de paramètres de commande de substitution.

14. Système selon l'une quelconque des revendications 11 à 13, le dispositif (102) d'utilisateur comportant en outre des moyens destinés à :
régler (209) l'ensemble de paramètres de commande de substitution sur un second ensemble ajusté de paramètres de commande de substitution ;
transmettre (209), au serveur (103) en nuage, le second ensemble ajusté de paramètres de commande de substitution ; et
transmettre, au serveur (103) en nuage, une demande de validation du second ensemble ajusté de paramètres de commande de substitution ;
le serveur (103) en nuage comportant en outre des moyens destinés à :
recevoir (209), en provenance du dispositif (102) d'utilisateur, le second ensemble ajusté de paramètres de commande de substitution ;
recevoir, en provenance du dispositif (102) d'utilisateur, la demande de validation du second ensemble ajusté de paramètres de commande de substitution ;
sur la base de la demande, évaluer (210) l'ensemble de paramètres de commande de substitution en simulant le jumeau numérique associé au dispositif (101) d'automation industrielle avec les multiples combinaisons d'entrées, tandis que le jumeau numérique est configuré pour utiliser le second ensemble ajusté de paramètres de commande de substitution ; et
transmettre (211), au dispositif (102) d'utilisateur, une seconde indication indiquant si le jumeau numérique reste ou non à l'intérieur de la plage de fonctionnement sûr d'après la simulation avec le second ensemble ajusté de paramètres de commande de substitution ;
l'ensemble de paramètres de commande de substitution appliqué par le dispositif (101) d'automation industrielle comportant le second ensemble ajusté de paramètres de commande, si la seconde indication indique que le jumeau numérique reste à l'intérieur de la plage de fonctionnement sûr.
